# EUROPÄISCHE PATENTSCHRIFT

(11) **EP 1 682 723 B1**
(45) Veröffentlichungstag und Bekanntmachung des Hinweises auf die Patenterteilung: **11.12.2013**
(21) Anmeldenummer: 04790373.7
(22) Anmeldetag: 13.10.2004
(51) Int. Cl.: D21H 21/42

(54) **SICHERHEITSELEMENT MIT FARBKIPPEFFEKT**
SECURITY ELEMENT WITH A COLOR-SHIFT EFFECT
ELEMENT DE SECURITE A EFFET DE DERIVE CHROMATIQUE

(30) Priorität: 17.10.2003 DE 10349000
(43) Veröffentlichungstag der Anmeldung: 26.07.2006
(73) Patentinhaber: Giesecke & Devrient GmbH, 81677 München (DE)
(72) Erfinder: HEIM, Manfred, 81543 München (DE); HOFFMÜLLER, Winfried, 83646 Bad Tölz (DE)
(86) Internationale Anmeldenummer: PCT/EP2004/011506
(87) Internationale Veröffentlichungsnummer: WO 2005/038136

(56) Entgegenhaltungen:
- EP-A- 0 341 002
- EP-A- 0 395 410
- EP-A- 0 733 919
- US-A- 3 711 176
- US-A- 3 962 397
- US-A- 4 216 018
- US-A- 4 639 069
- US-A- 5 279 657
- US-A- 5 571 624
- US-A- 6 010 751
- US-B1- 6 616 803

## Beschreibung

Die Erfindung betrifft ein Verfahren zum Herstellen eines Sicherheitselements für Sicherheitspapiere, Wertdokumente und dergleichen mit einem Dünnschichtelement mit Farbkippeffekt, das eine Reflexionsschicht, eine Absorberschicht und eine zwischen Reflexionsschicht und Absorberschicht angeordnete Zwischenschicht aufweist.

Wertdokumente, wie beispielsweise Banknoten, Aktien, Anleihen, Urkunden, Gutscheine, Schecks, hochwertige Eintrittskarten, aber auch andere fälschungsgefährdete Papiere, wie Pässe oder sonstige Ausweisdokumente, werden in der Regel mit verschiedenen Sicherheitselementen zur Erhöhung der Fälschungssicherheit versehen. Das Sicherheitselement kann beispielsweise in Form eines in einer Banknote eingebetteten Sicherheitsfadens, eines aufgebrachten Sicherheitsstreifens oder eines selbsttragenden Transferelements, das nach seiner Herstellung auf ein Wertdokument aufgebracht wird, ausgebildet sein.

Im Sinne der Erfindung bezeichnet "Sicherheitspapier" das unbedruckte Papier, das neben dem erfindungsgemäßen Sicherheitselment weitere Echtheitsmerkmale, wie im Volumen vorgesehene Lumineszenzstoffe, einen Sicherheitsfaden oder dergleichen, aufweisen kann. Es liegt üblicherweise in quasi endloser Form vor und wird zu einem späteren Zeitpunkt weiterverarbeitet.

Als "Wertdokument" wird ein Dokument bezeichnet, das für seinen bestimmungsgemäßen Gebrauch fertig gestellt ist. Dabei kann es sich beispielsweise um ein bedrucktes Wertpapier, wie eine Banknote, Urkunde oder dergleichen, eine Ausweiskarte, einen Pass oder ein sonstiges, eine Absicherung benötigendes Dokument handeln.

Es ist bekannt, Sicherheitselemente mit mehrschichtigen Dünnschichtelementen zu verwenden, deren Farbeindruck für den Betrachter sich mit dem Betrachtungswinkel ändert, beispielsweise von Grün nach Blau, von Blau nach Magenta oder von Magenta nach Grün. Derartige Farbänderungen beim Verkippen eines Sicherheitselements werden im Folgenden als Farbkippeffekt oder Color-Shift-Effekt bezeichnet.

Als für den Farbkippeffekt hauptsächlich verantwortliche Schicht enthalten die Dünnschichtelemente eine ultradünne dielektrische Schicht, die typischerweise zwischen einer halbtransparenten Absorberschicht und einer Reflexionsschicht angeordnet ist. Der Farbkippeffekt beruht auf Interferenzeffekten durch Mehrfachreflexionen in den verschiedenen Teilschichten des Dünnschichtelements. Dabei hängt der Wegunterschied des an den verschiedenen Schichten reflektierten Lichts einerseits vom Abstand zwischen Absorberschicht und Reflexionsschicht ab, der durch die Dicke der dielektrischen Zwischenschicht gegeben ist, und variiert andererseits mit dem jeweiligen Betrachtungswinkel. Liegt der Wegunterschied in der Größenordnung der Wellenlänge des sichtbaren Lichts, ergibt sich aufgrund von Auslöschung und Verstärkung bestimmter Wellenlängen ein winkelabhängiger Farbeindruck für den Betrachter.

Die dünnen Zwischenschichten werden typischerweise durch ein aufwändiges Vakuumaufdampfverfahren hergestellt. Insbesondere bei den im Bereich von Sicherheitspapieren und Banknoten erforderlichen Großflächenbeschichtungen sind die Anforderungen an die Präzision dabei extrem hoch, so dass derartige Vakuumbeschichtungen weltweit nur an wenigen Orten ausgeführt werden können.

Daher ist bereits vorgeschlagen worden, die Zwischenschicht in einem Druckprozess aufzudrucken. Dieses Herstellungsverfahren ist zwar grundsätzlich kostengünstiger, stellt jedoch außerordentlich hohe Anforderungen an die Konstanz des Druckprozesses, die in der Praxis nur schwer zu erreichen sind.

Die EP 0 733 919 A2 (= D1) beschreibt ein Verfahren zum Herstellen einer Interferenz-Farbbeschichtung, bei dem auf ein Substrat eine reflektierende Metallschicht, eine dielektrische Zwischenschicht auf Basis eines Acrylatmonomers und eine halbtransparente Metallschicht aufgebracht werden.

Davon ausgehend liegt der Erfindung die Aufgabe zugrunde, ein gattungsgemäßes Sicherheitselement vorzuschlagen, das gegenüber dem Stand der Technik einfacher und kostengünstiger herzustellen ist.

Diese Aufgabe wird durch die Merkmale des Hauptanspruchs gelöst. Weiterbildungen der Erfindung sind Gegenstand der Unteransprüche.

Das erfindungsgemäße Sicherheitselement baut auf dem Stand der Technik dadurch auf, dass die Zwischenschicht durch eine Schicht gebildet ist, deren Schichtdicke nach dem Aufbringen, nämlich Aufdrucken, durch äußere Einflüsse, insbesondere durch elektromagnetische Strahlung, Elektronenstrahlbehandlung oder Temperatureinwirkung, lokal modifizierbar ist. Vorzugsweise wird die Schichtdicke lokal irreversibel modifiziert. Durch die nachträgliche Beeinflussung der Schichtdicke der Zwischenschicht kann eine sehr konstante Schichtstärke erhalten werden, ohne dass eine höhere Genauigkeit beim Aufbringen, insbesondere beim Druckprozess selbst erforderlich ist. Auftretende Schwankungen der Schichtdicke können vielmehr nach dem Aufbringen durch eine gezielte, lokale Einwirkung äußerer Einflüsse ausgeglichen werden. Die Erfindung ermöglicht auch neue Effekte, wie die nachträgliche Einbringung von Motiven mit abweichender Schichtstärke in das Dünnschichtelement.

Nach einer bevorzugten Ausgestaltung der Erfindung enthält die Zwischenschicht ein Material, das bei Einwirkung eines äußeren Einflusses polymerisiert oder aufschäumt, und dabei eine Volumenänderung von bis zu 4% oder mehr, bevorzugt von bis zu 8% oder mehr, besonders bevorzugt von bis zu 12% oder mehr erfährt. Durch Steuerung des äußeren Einflusses, beispielsweise der Stärke einer UV-Bestrahlung, kann dann die Schichtdicke in einem Bereich zwischen Null und einer durch die maximale Volumenänderung gegebenen Obergrenze modifiziert werden. Innerhalb dieses Bereichs können Schichtdickenschwankungen ausgeglichen werden, bzw. gezielte Schichtdickenvariationen eingefügt werden.

In einer bevorzugten Variante ist die Zwischenschicht durch ein reaktives Lacksystem gebildet, dessen Polymerisation eine Schichtdickenverringerung der Zwischenschicht bewirkt. Einen besonders großen Polymerisationsschrumpf und damit einen breiten Änderungsbereich weisen UV-härtende Lacksysteme und andere reaktive Lacksysteme auf Basis von Acrylatmonomeren oder Acrylatoligomeren auf. Beispielsweise weisen gehärtete Schichten aus Trimethylolpropan-Triacrylat (TMPTA), Tripropylenglykol-Diacrylat (TPGDA), Trimethylolpropanethoxy-Triacrylat (TMPEOTA) oder Glycerolpropoxyl-Triacrylat (GPTA) einen Schrumpf von 10% bis zu etwa 17% auf.

Weitere Beispiele von für die Erfindung brauchbaren reaktiven Lacksystemen sind in der Druckschrift EP 201323 A2 unter der Überschrift "Transparent hologramm forming layer" aufgeführt. Die Offenbarung der genannten Schrift wird insoweit in die vorliegende Anmeldung aufgenommen. Bei Durchführung einer UV-Härtung enthält das Lacksystem zweckmäßig einen Photoinitiator. Wird die Polymerisation mittels Elektronenbestrahlung durchgeführt, kann die Vernetzung auch ohne Photoinitiator stattfinden.

Bei einer anderen, ebenfalls bevorzugten Variante enthält die Zwischenschicht ein schäumbares Material, dessen Aufschäumen eine Schichtdickenvergrößerung der Zwischenschicht bewirkt. Dabei kommen sowohl reaktive Systeme, wie etwa Polyurethanschäume infrage, als auch Systeme, die ohne chemische Reaktion einen Volumenzuwachs aufweisen, wie etwa Polystyrol.

Die Zwischenschichten werden aufgedruckt.

Nach der Dickenmodifikation weist die Zwischenschicht bevorzugt eine Schichtdicke zwischen 50 nm und 800 nm, besonders bevorzugt zwischen 100 und 400 nm auf. Der auftretende Farbkippeffekt hängt dabei wesentlich von der optischen Dicke dₒₚₜ = n*d der Zwischenschicht ab, in der neben der Schichtdicke d der Zwischenschicht auch der Brechungsindex n des verwendeten Zwischenschichtmaterials eingeht.

Die Zwischenschicht ist vorzugsweise transluzent, besonders bevorzugt transparent. Unter "transluzent" ist hierbei zu verstehen, dass die Schicht semitransparent ist, d.h. die Schicht weist eine Lichtdurchlässigkeit von unter 90 %, vorzugsweise zwischen 80 und 20 % auf. Unter Transparenz ist eine Lichtdurchlässigkeit von mindestens 90 % zu verstehen.

Während die Ausgestaltungen einer Erfindungsvariante das Ziel verfolgen, die Dicke der Zwischenschicht in der Schichtebene möglichst konstant einzustellen, weist die dickenmodifizierte Zwischenschicht in anderen bevorzugten Ausgestaltungen eine gezielt eingebrachte, räumlich variierende Schichtdicke auf. Beispielsweise kann sich der Farbkippeffekt durch eine stetige Veränderung der Schichtdicke über die Fläche des Sicherheitselements kontinuierlich verändern. Ändert sich in anderen Gestaltungen die Schichtdicke sprunghaft zwischen zwei oder mehr Werten, so ergeben sich abgesetzte Bereiche mit unterschiedlich erscheinendem Farbkippeffekt. Diese Bereiche können auch ein Muster, Zeichen oder eine Codierung bilden.

Als Absorberschichten dienen typischerweise Metallschichten aus Materialien, wie Chrom, Eisen, Gold, Aluminium oder Titan in einer Dicke von vorzugsweise 4 nm bis 20 nm. Als Absorberschichtmaterialien können auch Verbindungen, wie Nickel-Chrom-Eisen, oder seltenere Metalle, wie Vanadium, Palladium oder Molybdän, verwendet werden. Weitere geeignete Materialien sind z.B. Nickel, Cobalt, Wolfram, Niobium, Aluminium, Metallverbindungen, wie Metallfluoride, -oxide, -sulfide, -nitride, -carbide, - phosphide, -selenide, -silicide und Verbindungen davon, aber auch Kohlenstoff, Germanium, Cermet, Eisenoxid und dergleichen. Die Absorberschichten können identisch sein, können aber auch unterschiedlich sein und/oder aus unterschiedlichem Material bestehen.

Die Reflexionsschicht ist vorzugsweise durch eine opake oder semitransparente Metallschicht oder durch eine transparente Reflexionsschicht gebildet, die einen von der Zwischenschicht verschiedenen Brechungsindex aufweist.

Bei der Reflexionsschicht handelt es sich vorzugsweise um eine Metallschicht, beispielsweise aus Aluminium, Silber, Nickel, Platin oder Palladium, vorzugsweise aus Silber oder Aluminium oder aus einem anderen stark spiegelnden Metall. Je besser die Reflexionseigenschaften der Reflexionsschicht sind, desto auffälliger ist der Farbkippeffekt und desto brillanter ist die gegebenenfalls vorhandene beugungsoptische Wirkung der Reliefstruktur.

In einer vorteilhaften Weiterbildung der Erfindung ist vorgesehen, dass die Absorberschicht und/oder die Zwischenschicht Aussparungen in Form von Mustern, Zeichen oder Codierungen aufweist, in denen kein Farbkippeffekt erkennbar ist. Auch die Reflexionsschicht kann Aussparungen in Form von Mustern, Zeichen oder Codierungen aufweisen, die dann transparente oder semitransparente Bereiche in dem Dünnschichtelement bilden. Derartige Aussparungen können die Fälschungssicherheit des Sicherheitselements weiter erhöhen.

In manchen Ausgestaltungen ist es zweckmäßig, das Dünnschichtelement auf einer Trägerfolie, insbesondere einer transparenten Trägerfolie, aufzubringen. Es kann dann mit der Trägerfolie auf oder in einen Gegenstand, wie etwa ein Sicherheitspapier oder ein Wertdokument, auf- oder eingebracht werden.

Gemäß einer vorteilhaften Weiterbildung der Erfindung weist das Dünnschichtelement auf der von der Zwischenschicht abgewandten Seite der Reflexionsschicht eine zweite Absorberschicht und eine zwischen der zweiten Absorberschicht und der Reflexionsschicht angeordnete transparente zweite Zwischenschicht auf, so dass ein doppelseitiges Sicherheitselement mit von beiden Seiten sichtbaren Farbkippeffekten entsteht. Ein solches Sicherheitselement kann beispielsweise über einem Fensterbereich oder einem Loch eines Wertdokuments aufgebracht werden.

Um eine größere Vielfalt an Farbeffekten bereitstellen zu können, kann zwischen der Reflexionsschicht und der zweiten Absorberschicht eine zweite Reflexionsschicht mit von der ersten Reflexionsschicht unterschiedlichen Reflexionseigenschaften angeordnet sein.

Bei einer anderen Gestaltung eines doppelseitigen Sicherheitselements ist ein erstes Dünnschichtelement auf einer ersten Hauptfläche einer Trägerfolie, insbesondere einer transparenten Trägerfolie, aufgebracht. Auf der gegenüberliegenden Hauptfläche der Trägerfolie ist ein zweites Dünnschichtelement mit Farbkippeffekt angeordnet, das eine zweite Reflexionsschicht, eine zweite Absorberschicht und eine zwischen Reflexionsschicht und Absorberschicht angeordnete transparente zweite Zwischenschicht aufweist, so dass wiederum ein doppelseitiges Sicherheitselement mit von beiden Seiten sichtbaren Farbkippeffekten entsteht.

Die zweite Zwischenschicht ist in beiden Gestaltungen vorzugsweise durch eine zweite erfindungsgemäße Schicht gebildet, deren Schichtdicke nach dem Aufbringen durch äußere Einflüsse, insbesondere durch Dehnung, elektromagnetische Strahlung, Elektronenstrahlbehandlung oder Druck- und/oder Temperatureinwirkung, lokal irreversibel modifizierbar ist.

Für die konkrete Ausbildung der zweiten Zwischenschicht gilt das oben für die erste Zwischenschicht Gesagte entsprechend. Es ist dabei oft zweckmäßig, jedoch nicht zwingend erforderlich, dass die erste und zweite Zwischenschicht gleich ausgebildet sind. Insbesondere wenn auf gegenüberliegenden Seiten verschiedene Farbkippeffekte erzeugt werden sollen, kann dies mit Vorteil durch die Wahl unterschiedlicher Materialien und/oder unterschiedlicher Schichtdicken der beiden Zwischenschichten erfolgen. Die beiden Zwischenschichten können dazu sogar zunächst mit derselben Schichtdicke aufgebracht werden, dann aber einer unterschiedlichen Nachbehandlung, beispielsweise einer UV-Bestrahlung verschiedener Intensität oder Dauer, unterworfen werden, um so unterschiedliche modifizierte Schichtdicken zu erzielen.

In einer zweckmäßigen Weiterbildung der Erfindung ist das Dünnschichtelement mit einer flächigen Beugungsstruktur versehen und bildet ein Color-Shift-Hologramm, bei dem ein Farbkippeffekt mit einem holographischen Effekt kombiniert ist.

Gemäß einer ersten Variante der Erfindung ist dabei die Trägerfolie selbst mit der flächigen Beugungsstruktur versehen. Sie kann sowohl auf der dem Dünnschichtelement zugewandten Seite als auch auf der abgewandten Seite mit der Beugungsstruktur versehen sein. In alternativen Gestaltungen enthalten das oder die Dünnschichtelemente eine zusätzliche Lackschicht, in die eine flächige Beugungsstruktur eingeprägt ist.

In einer weiteren Ausgestaltung der Erfindung besteht die Beugungsstruktur aus einem Gitterbild mit einem oder mehreren Gitterfeldern, die jeweils ein Beugungsgittermuster aus einer Vielzahl von Strichgitterlinien enthalten, wobei die Strichgitterlinien durch die Parameter Orientierung, Krümmung, Beabstandung und Profilierung charakterisiert sind. Zumindest einer dieser Parameter variiert über die Fläche des Gitterfeldes, um vorzugsweise Matteffekte zu erzeugen.

Nachdem die Schichtdicke der Zwischenschicht durch UV-Bestrahlung oder eine andere Maßnahme modifiziert ist, können das oder die Dünnschichtelemente zur Verhinderung weiterer ungewollter Schichtdickenmodifikationen mit einer Schutzschicht versehen werden. Dabei handelt es sich insbesondere um eine im sichtbaren Spektralbereich transparente, UV-absorbierende Schicht.

Die beschriebenen Sicherheitselemente können beispielsweise in Form eines Sicherheitsstreifens, eines Sicherheitsfadens, eines Sicherheitsbands oder eines Transferelements zum Aufbringen auf ein Sicherheitspapier, Wertdokument und dergleichen ausgebildet sein.

Die Erfindung umfasst auch ein Sicherheitspapier für die Herstellung von Sicherheitsdokumenten, wie Banknoten, Ausweiskarten oder dergleichen, das mit einem oben beschriebenen Sicherheitselement ausgestattet ist. Das Sicherheitspapier kann insbesondere wenigstens einen durchgehenden Fensterbereich oder ein Loch enthalten, das mit dem Sicherheitselement bedeckt ist. In diesem Fall kommt mit Vorteil ein doppelseitiges Sicherheitselement zum Einsatz, dessen Farbkippeffekte für den Betrachter von beiden Seiten erkennbar sind.

Die Erfindung enthält ferner ein mit einem oben beschriebenen Sicherheitselement ausgestattetes Wertdokument, beispielsweise eine Banknote. Das Wertdokument kann ebenfalls einen mit dem Sicherheitselement bedeckten Fensterbereich oder ein damit abgedecktes Loch enthalten.

Das beschriebene Sicherheitselement, Sicherheitspapier oder Wertdokument kann unter anderem zur Sicherung von Waren beliebiger Art eingesetzt werden.

Zur Herstellung eines Sicherheitselements der beschriebenen Art wird erfindungsgemäß die erste und/oder zweite Zwischenschicht aufgebracht, nämlich mit einer Druckfarbe aufgedruckt, und deren Schichtdicke nach dem Aufbringen, nämlich Aufdrucken, durch äußere Einflüsse, insbesondere durch elektromagnetische Strahlung, Elektronenstrahlbehandlung oder Temperatureinwirkung, modifiziert, vorzugsweise irreversibel modifiziert.

Die erste und/ oder zweite Zwischenschicht wird dabei in einer bevorzugten Verfahrensvariante mit einem lösungsmittelhaltigen reaktiven Lacksystem aufgedruckt, das Lösungsmittel wird durch eine thermische Trocknung verdampft und der Lack durch elektromagnetische Strahlung, Elektronenstrahlbehandlung oder Druck- und/oder Temperatureinwirkung teilweise oder vollständig polymerisiert. In einer alternativen Variante wird die erste und/ oder zweite Zwischenschicht mit einer Druckfarbe aufgedruckt, die ein schäumbares Material enthält, und das Material wird durch elektromagnetische Strahlung, Elektronenstrahlbehandlung oder Temperatureinwirkung aufgeschäumt. In einer weiteren Variante wird die erste und/ oder zweite Zwischenschicht mit einem komprimierbaren Material gedruckt, das durch Druck- und gegebenenfalls Temperatureinwirkung komprimiert werden kann.

Bevorzugt wird die Dicke der ersten und/oder zweiten Zwischenschicht vor dem Polymerisationsschritt oder dem Aufschäumschritt oder dem Kompressionsschritt oder dem Dehnungsschritt gemessen. Besonders bevorzugt wird die Schichtdicke berührungslos gemessen, beispielsweise durch ein optisches System mit einem oder mehreren durchstimmbaren Lasern. Zweckmäßig wird die Schichtdicke dabei an verschiedenen Stellen gemessen, um Informationen über eventuelle Ungleichmäßigkeiten des Aufdruckvorgangs zu erhalten.

In einer vorteilhaften Ausgestaltung wird die Dicke der ersten und/oder zweiten Zwischenschicht lokal modifiziert, um eventuelle Ungleichmäßigkeiten des Aufdruckvorgangs auszugleichen. Alternativ oder zusätzlich können durch die lokale Schichtdickenmodifikation Muster, Zeichen, oder eine Codierung in das Sicherheitselement eingebracht werden. Die Dickenmodifikation der ersten und/oder zweiten Zwischenschicht erfolgt dabei zweckmäßig vor dem Aufbringen weiterer Schichten auf die Zwischenschicht. Bei Modifikation durch Strahlung ist alternativ auch eine Modifikation nach Aufbringung der halbtransparenten Absorberschicht möglich.

Als Druckverfahren für den Aufdruck der Zwischenschicht(en) kommen insbesondere Tiefdruck, Flexodruck oder Offsetdruck infrage.

Um ein Color-Shift-Hologramm mit kombiniertem Farbkippeffekt und Hologrammeffekt herzustellen, können das erste und/oder zweite Dünnschichtelement auf einer Trägerfolie aufgebracht werden, die mit einer flächigen Beugungsstruktur versehen ist. Alternativ werden das oder die Dünnschichtelemente mit einer geprägten Lackschicht mit einer flächigen Beugungsstruktur ausgestattet.

Die Schichtdickenmodifikation kann sich direkt an das Aufbringen der Dünnschichten auf die Trägerfolie anschließen oder auch erst nach der weiteren Bearbeitung erfolgen. Unter weiterer Bearbeitung ist z.B. das Zerschneiden der Folie in Sicherheitsfäden zu verstehen.

In einem weiteren Aspekt enthält die Erfindung optisch variable Farbpigmente für eine Druckfarbe, die durch Interferenzschicht-Partikel gebildet sind. Der Schichtaufbau der Interferenzschicht-Partikel umfasst eine Absorberschicht, eine transparente Zwischenschicht und eine Reflexionsschicht, wobei die Zwischenschicht zwischen der Reflexionsschicht und der Absorberschicht angeordnet ist. Die Zwischenschicht ist dabei vorzugsweise durch eine Druckschicht gebildet, deren Schichtdicke nach dem Aufbringen, vorzugsweise Aufdrucken, durch äußere Einflüsse, insbesondere durch Dehnung, elektromagnetische Strahlung, Elektronenstrahlbehandlung oder Druck- und/oder Temperatureinwirkung, lokal modifizierbar, vorzugsweise irreversibel modifizierbar ist.

In einer bevorzugten Ausgestaltung der Farbpigmente weisen die Interferenzschicht-Partikel auf der von der Zwischenschicht abgewandten Seite der Reflexionsschicht eine zweite Absorberschicht und eine zwischen der zweiten Absorberschicht und der Reflexionsschicht angeordnete transparente zweite Zwischenschicht auf und bilden so doppelseitige Interferenzschicht-Partikel mit von beiden Seiten sichtbaren Farbkippeffekten. Bezüglich der Ausgestaltung der Zwischenschicht(en), der Reflexionsschicht und der Absorberschicht wird auf die obigen Ausführungen in Zusammenhang mit dem Sicherheitselement verwiesen, die für die Interferenzschicht-Partikel der Farbpigmente ebenfalls gelten.

Die Erfindung umfasst auch ein Verfahren zur Herstellung optisch variabler Farbpigmente, bei dem
a) auf ein Substrat ein Dünnschichtelement mit Farbkippeffekt aufgebracht wird, indem in dieser Reihenfolge eine Reflexionsschicht, eine Zwischenschicht und eine Absorberschicht aufgebracht werden, wobei die Schichtdicke der Zwischenzeischt nach dem Aufbringen durch äußere Einflüsse, insbesondere durch Dehnung, elektromagnetische Strahlung, Elektronenstrahlbehandlung oder Druck- und/oder Temperatureinwirkung, modifiziert wird,
b) das Dünnschichtelement von dem Substrat abgelöst, und
c) das abgelöste Dünnschichtelement auf eine gegebene Partikelgröße gemahlen wird.

Bevorzugt werden dabei in Schritt a) vor dem Aufbringen der Reflexionsschicht eine zweite Absorberschicht und eine zweite transparente Zwischenschicht auf das Substrat aufgebracht, wobei die Schichtdicke der zweiten Zwischenschicht nach dem Aufbringen durch äußere Einflüsse, insbesondere durch Dehnung, elektromagnetische Strahlung, Elektronenstrahlbehandlung oder Druck- und/oder Temperatureinwirkung, modifiziert wird. Die erste und/oder zweite Zwischenschicht werden besonders bevorzugt mit einer Druckfarbe aufgedruckt. Besonders bevorzugt wird die Schichtdicke der ersten und/oder zweiten Zwischenschicht irreversibel modifiziert.

Die Dicke der ersten und/oder zweiten Zwischenschicht wird vorzugsweise lokal modifiziert, um eventuelle Ungleichmäßigkeiten des Aufdruckvorgangs auszugleichen.

In einer zweckmäßigen Variante wird in Schritt a) nach dem Aufbringen der zweiten transparenten Zwischenschicht und vor dem Aufbringen der Reflexionsschicht eine zweite Reflexionsschicht mit von der ersten Reflexionsschicht unterschiedlichen Reflexionseigenschaften aufgebracht.

Die Zwischenschicht(en) kann/können insbesondere mittels Curtain Coating,Tiefdruck, Flexodruck oder Offsetdruck aufgebracht werden.

Die Erfindung enthält auch eine Druckfarbe mit den beschriebenen optisch variablen Farbpigmenten.

Weitere Ausführungsbeispiele sowie Vorteile der Erfindung werden nachfolgend anhand der Figuren erläutert. Zur besseren Anschaulichkeit wird in den Figuren auf eine maßstabs- und proportionsgetreue Darstellung verzichtet.

Es zeigen:
- Fig. 1: eine schematische Darstellung einer Banknote mit eingebettetem Color-Shift-Sicherheitsfaden und aufgeklebtem Color-Shift-Transferelement, jeweils nach einem Ausführungsbeispiel der Erfindung,
- Fig. 2: ein Color-Shift-Sicherheitselement, wie den Sicherheitsfaden von Fig. 1, im Querschnitt,
- Fig. 3: eine schematische Darstellung eines Sicherheitselements nach einem weiteren Ausführungsbeispiel der Erfindung,
- Fig. 4: im linken, mittleren und rechten Bildteil weitere Ausführungsbeispiele erfindungsgemäßer Sicherheitselemente mit Aussparungen in verschiedenen Teilschichten,
- Fig. 5: einen Schnitt durch die Banknote und das Color-Shift-Transferelement von Fig. 1 entlang der Linie V-V,
- Fig. 6: ein Sicherheitselement mit doppelseitigem Dünnschichtelement nach einem weiteren Ausführungsbeispiel der Erfindung,
- Fig. 7: ein doppelseitiges Sicherheitselement nach einem weiteren Ausführungsbeispiel der Erfindung,
- Fig. 8: ein Color-Shift-Hologramm nach einem Ausführungsbeispiel der Erfindung im Querschnitt,
- Fig. 9: ein anderes Color-Shift-Hologramm nach einem weiteren Ausführungsbeispiel der Erfindung, und
- Fig. 10: eine Druckfarbe mit optisch variablen Farbpigmenten nach einem Ausführungsbeispiel der Erfindung.

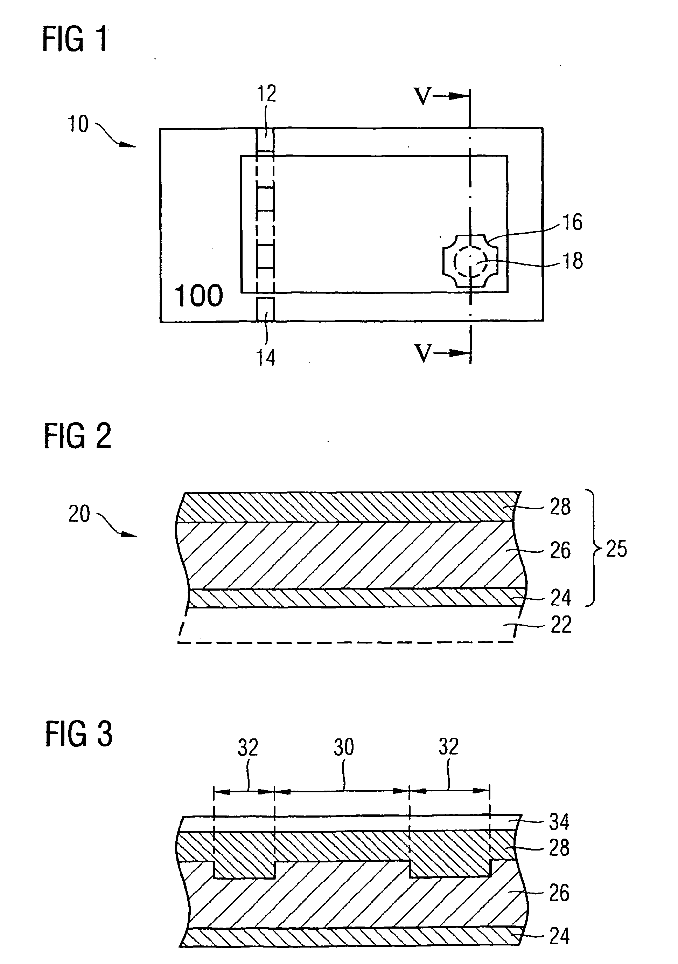

Die Erfindung wird nun am Beispiel einer Banknote erläutert. Fig. 1 zeigt eine schematische Darstellung einer Banknote 10, die mit einem eingebetteten Color-Shift-Sicherheitsfaden 12 und einem aufgeklebten Color-Shift-Transferelement 16 versehen ist. Der Sicherheitsfaden 12 tritt an bestimmten Fensterbereichen 14 an der Oberfläche der Banknote 10 hervor, während er in den dazwischen liegenden Bereichen im Inneren der Banknote 10 eingebettet ist. In den Fensterbereichen 14 zeigt der Sicherheitsfaden 12 einen Farbkippeffekt, der dem Betrachter einen sich mit dem Betrachtungswinkel ändernden Farbeindruck vermittelt.

Die Banknote 10 enthält weiter eine durchgehende gestanzte Öffnung 18, die auf der Vorderseite der Banknote von dem Color-Shift-Transferelement 16 vollständig bedeckt ist. Alternativ kann die Öffnung auch papiertechnisch erzeugt worden sein. Das Transferelement 16 zeigt ebenfalls Farbkippeffekte und zwar einen ersten Farbkippeffekt bei Betrachtung seiner Vorderseite, und einen zweiten unterschiedlichen Farbkippeffekt bei Betrachtung seiner Rückseite durch die Öffnung 18 hindurch.

Zunächst wird der allgemeine Schichtaufbau eines erfindungsgemäßen Sicherheitselements, wie etwa des Sicherheitsfadens 12, mit Bezug auf die Querschnittdarstellungen der Figuren 2 bis 4 erläutert.

Das Sicherheitselement 20 der Fig. 2 enthält ein Dünnschichtelement 25, das auf einer Trägerfolie 22 aufgebracht ist. In manchen Ausgestaltungen des erfindungsgemäßen Sicherheitselements kann die Trägerfolie 22 auch fehlen und das Dünnschichtelement direkt auf einem Sicherheitspapier oder einem Wertdokument aufgebracht sein. Die Trägerfolie 22 ist daher in der Fig. 2 nur gestrichelt dargestellt.

Das Dünnschichtelement 25 weist eine durch eine opake Metallschicht gebildete Reflexionsschicht 24, eine auf die Reflexionsschicht aufgedruckte transparente Zwischenschicht 26 und eine Absorberschicht 28 auf. Im Ausführungsbeispiel ist die Zwischenschicht 26 durch ein reaktives Lacksystem, wie einem UV-härtbaren Lack, gebildet, dessen Schichtdicke nach dem Aufdrukken durch Dehnung, UV-Bestrahlung, Elektronenstrahlbehandlung bzw. durch Druck- und/oder Temperatureinfluss noch innerhalb gewisser Grenzen modifiziert werden kann.

Bei der Herstellung des Dünnschichtelements wird das reaktive Lacksystem mit einem Lösungsmittel verdünnt und in einer etwas größeren als der gewünschten Schichtdicke, typischerweise mit einer Schichtdicke zwischen 200 und 400 nm, auf die Reflexionsschicht von Rolle aufgedruckt. Dann wird das Lösungsmittel in einem thermischen Trocknungsschritt verdampft, um das System blockfest zu machen, so dass es zur nachfolgenden Metallisierung aufgewickelt werden kann. Das Lacksystem wird dabei erfindungsgemäß so gewählt, dass es nach dem thermischen Trocknungsschritt noch einen erheblichen Polymerisationsschrumpf besitzt.

Die tatsächliche Schrumpfung bei der Polymerisation kann durch die Steuerung der Temperatur bei der Polymerisation nach Bedarf eingestellt werden, da bei höherer Temperatur ein höherer Umsatz der Doppelbindungen erreicht werden kann. Beispielsweise kann der Schrumpf durch die Leistung der UV-Bestrahlung geeignet eingestellt werden. Es versteht sich, dass die Bestrahlungsleistung lokal variiert werden kann, um einen lokal unterschiedlichen Schrumpf zu erzielen.

Um eine besonders gleichmäßige Dicke der aufgedruckten Zwischenschicht 26 zu erzielen, wird die Schichtdicke der Zwischenschicht 26 nach der thermischen Trocknung berührungslos, beispielsweise durch ein optisches System mit einem oder mehreren durchstimmbaren Lasern, gemessen, um Informationen über eventuelle Ungleichmäßigkeiten des Druckvorgangs zu erhalten. Beispielsweise kann sich bei einer angestrebten Schichtdicke von etwa 245 nm als Ergebnis des Messschritts ergeben, dass die aufgedruckte Schichtdicke im linken Teil der Bahn 270 nm, im der Mitte 275 nm und im rechten Teil der Bahn 260 nm beträgt.

Die nachfolgende UV-Bestrahlung wird nun in ihrer lokalen Stärke auf dieses Messergebnis ausgerichtet. Schon wenn es gelingt, im linken Teil und der Mitte einen Schrumpf von 10% zu erhalten und im rechten Teil einen Schrumpf von 6%, so ergibt sich nach der Polymerisation im linken Bahnteil als Schichtdicke etwa 243 nm, in der Mitte etwa 248 nm und im rechten Bahnteil etwa 244 nm. In dem angesprochenen Beispiel gelangt man so von einer kaum akzeptablen Schwankung zu einer Schwankung im Gut-Bereich, so dass der Ausschuss deutlich verringert werden kann.

Durch die anschließende Metallisierung mit der halbtransparenten Absorberschicht 28 wird die Zwischenschicht 26 vor weiterer unkontrollierter Polymerisation geschützt und die erreichte Schichtdicke somit fixiert. Anstelle der genannten schrumpfbaren reaktiven Lacksysteme können auch Zwischenschichten 26 aufgedruckt werden, die ein schäumbares Material enthalten. Beim Aufschäumen vergrößert sich die Schichtdicke der Zwischenschicht je nach dem Anteil und dem Volumenzuwachs des schäumbaren Materials entsprechend.

Bei dem Ausführungsbeispiel der Fig. 3 ist eine Möglichkeit gezeigt, die nachträgliche Schichtdickenmanipulation zur Erzeugung spezieller Farbeffekte zu nutzen. Dabei werden in der Zwischenschicht 26 beispielsweise durch lokal unterschiedliche UV-Bestrahlung Bereiche 30 mit größerer Schichtdicke und Bereiche 32 mit geringerer Schichtdicke erzeugt. In den beiden Bereichen 30, 32 treten für den Betrachter aufgrund der unterschiedlichen Wegdifferenzen der reflektierten Strahlung unterschiedliche Farbkippeffekte auf. In der Ebene der Banknote 10 können die Bereiche 30, 32 beispielsweise in Form von Mustern, Zeichen oder Codierungen angeordnet sein und so ein zusätzliches Echtheitsmerkmal für die Banknote 10 bilden.

Sind die Bereiche 30, 32 unterschiedlicher Dicke relativ großflächig ausgebildet, so ist der unterschiedliche Farbeffekt auch mit bloßem Auge gut zu erkennen. Sehr kleinräumige Variationen der Schichtdicke der Zwischenschicht 26, etwa in Form einer codierten Information, können als aufwändiges und schwer nachzuahmendes Sicherheitsmerkmal eingesetzt werden.

Im Ausführungsbeispiel der Fig. 3 ist über der Absorberschicht 28 eine im sichtbaren Spektralbereich transparente, UV-absorbierende Schutzlackschicht 34 aufgebracht, um einen zusätzlichen Schutz vor unerwünschten Schichtdickenänderungen bereitzustellen. Es versteht sich, dass auch die anderen gezeigten Ausführungsformen mit einer derartigen Schutzschicht versehen werden können.

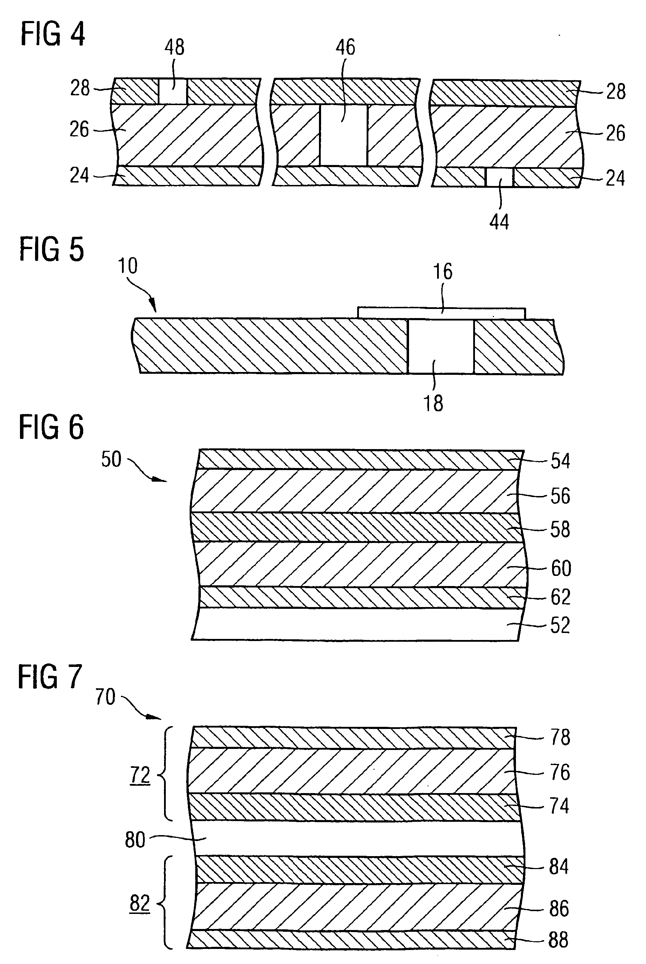

Fig. 4 zeigt weitere Ausführungsbeispiele der Erfindung, bei denen die Absorberschicht 28, die Zwischenschicht 26 oder die Reflexionsschicht 24 mit Aussparungen 48, 46 bzw. 44 in Form von Mustern, Zeichen oder Codierungen versehen sind. Werden, wie im linken Bildteil gezeigt, Aussparungen 48 in die Absorberschicht 28 eingebracht, so entstehen dort Bereiche ohne Farbkippeffekt, die mit dem variablen Farbeffekt ihrer Umgebung kontrastieren. Auch beim Einbringen von Aussparungen 46 in die Zwischenschicht 26 entstehen Bereiche ohne Farbkippeffekt. Werden, wie im rechten Bildteil gezeigt, Aussparungen 44 in die Reflexionsschicht 24 eingebracht, so entstehen dort transparente oder semitransparente Bereiche, die dem Betrachter im Durchlicht eine auffällige Kontrastwirkung bieten.

Zurückkommend auf das in Fig. 1 dargestellte Color-Shift-Transferelement 16 zeigt der Querschnitt der Fig. 5 einen Schnitt der Banknote 10 entlang der Linie V-V. Die vollständige Bedeckung der Öffnung 18 durch das Transferelement 16 ist deutlich zu erkennen. Einer der Farbkippeffekte des Transferelements 16 ist bei Betrachtung der Banknotenvorderseite, der andere bei Betrachtung der Banknotenrückseite durch die Öffnung 18 erkennbar. Um einen für den Betrachter gut erkennbaren Farbeffekt zu erzeugen, darf der Durchmesser der Öffnung 18 dabei nicht zu klein gewählt werden.

Das in den Figuren 1 und 5 dargestellte Transferelement kann einen Schichtaufbau aufweisen, wie er nachfolgend in Zusammenhang mit den Figuren 6, 7 oder 9 erläutert wird.

Das in Fig. 6 gezeigte Sicherheitselement 50 weist eine transparente Trägerfolie 52 auf, auf der eine erste Absorberschicht 54, eine erste transparente Zwischenschicht 56, eine Reflexionsschicht 58, eine zweite transparente Zwischenschicht 60 und eine zweite Absorberschicht 62 angeordnet sind. Die beiden Zwischenschichten 56 und 60 sind, wie oben beschrieben, durch ein reaktives Lacksystem gebildet, dessen Schichtdicke nachträglich modifiziert werden kann. Die beiden Zwischenschichten und die beiden Absorberschichten können gleich oder unterschiedlich ausgebildet sein, um aus gegenüberliegenden Betrachtungsrichtungen entweder denselben oder einen unterschiedlichen Farbkippeffekt zu erzeugen.

Es besteht auch die Möglichkeit, die Reflexionsschicht 58 durch zwei unterschiedliche, übereinander angeordnete Reflexionsschichten, beispielsweise verschiedenfarbige Metallschichten, zu ersetzen, um verschiedene Farbeffekte für die gegenüberliegenden Seiten zu erhalten. Es versteht sich weiter, dass auch die oben in Zusammenhang mit den Figuren 3 und 4 beschriebenen Varianten mit dem doppelseitigen Sicherheitselement der Fig. 6 kombiniert werden können.

Ein weiteres Ausführungsbeispiel der Erfindung ist in der Fig. 7 illustriert. Bei dem Sicherheitselement 70 sind zwei getrennte Dünnschichtelemente 72 und 82 auf gegenüberliegende Seiten einer Trägerfolie 80 aufgebracht. Bei diesem Ausführungsbeispiel muss die Trägerfolie nicht transparent sein, um die Sichtbarkeit der beiden Farbkippeffekte zu gewährleisten. Jedes der Dünnschichtelemente weist eine Reflexionsschicht 74 bzw. 84, eine gedruckte transparente Zwischenschicht 76 bzw. 86, und eine Absorberschicht 78 bzw. 88 auf. Auch hier können die beiden Dünnschichtelemente bei Betrachtung von gegenüberliegenden Seiten denselben oder einen unterschiedlichen Farbkippeffekt zeigen. Dazu können Material und/oder Dicke der Zwischenschichten 76, 86, der Reflexionsschichten 74, 84 oder der Absorberschichten 78, 88 gleich oder unterschiedlich gewählt sein.

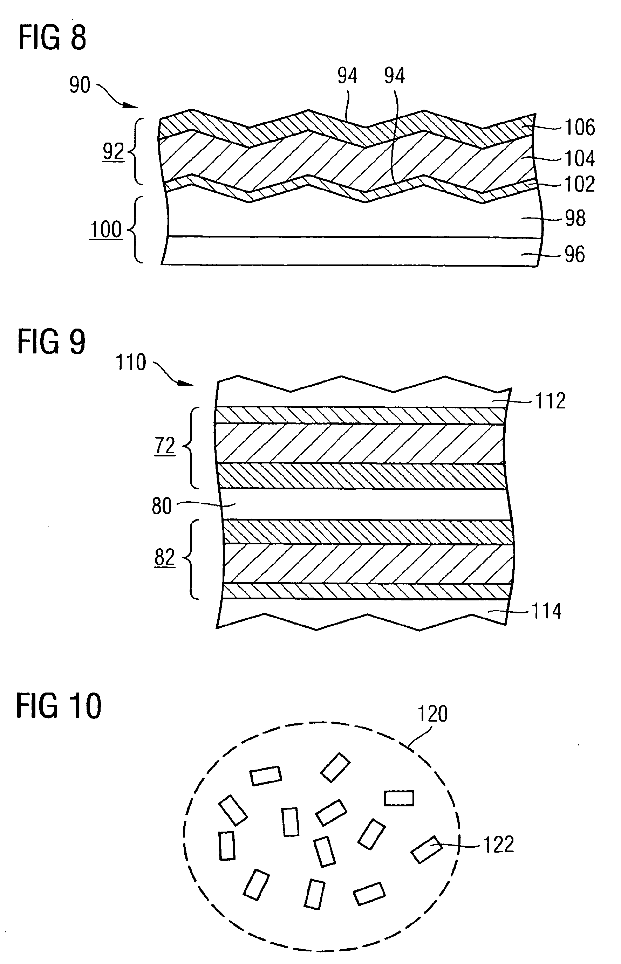

Fig. 8 zeigt ein weiteres Ausführungsbeispiel eines erfindungsgemäßen Sicherheitselements 90, das ein Color-Shift-Hologramm darstellt. Das Sicherheitselement 90 enthält ein Dünnschichtelement 92 mit Farbkippeffekt, das mit einer flächigen Beugungsstruktur 94 versehen ist. Dazu wird zunächst auf einer Substratfolie 96 eine Prägelackschicht 98 aufgebracht und eine Beugungsstruktur 94 eingeprägt. Substratfolie 96 und Prägelackschicht 98 bilden zusammen eine Trägerfolie 100 für das Dünnschichtelement 92.

Dann wird auf die Prägelackschicht 98 eine Reflexionsschicht 102 aufgedampft und auf diese, wie oben beschrieben, eine transparente Zwischenschicht 104 aufgedruckt, deren Schichtdicke nach der Herstellung gezielt beeinflusst werden kann. Nach Durchführung einer eventuellen Schichtdickenmodifizierung wird eine Absorberschicht 106 auf die Zwischenschicht 104 aufgebracht. Die Beugungsstruktur der Prägelackschicht 98 setzt sich dabei in den Schichten 102,104 und 106 vertikal nach oben fort. Bei der Betrachtung zeigt das Sicherheitselement 90 somit einen mit einem Farbkippeffekt kombinierten holographischen Effekt.

In einem Ausführungsbeispiel des Color-Shift-Hologramms sind die transparente Zwischenschicht 104 und die Prägelackschicht 98 jeweils durch einen UV-Lack gebildet. Bei der lokalen Schichtdickenmodifizierung der Zwischenschicht 104, beispielsweise zum Einschreiben eines Musters oder einer Codierung, kann dann gleichzeitig die Schichtdicke des UV-Lacks der Prägelackschicht 98 lokal verändert werden. Dadurch entstehen Bereiche mit von ihrer Umgebung abweichendem holographischem Effekt.

Das Sicherheitselement 110 der Fig. 9 ist eine Abwandlung des in Zusammenhang mit Fig. 7 beschriebenen Sicherheitselements, das zwei Dünnschichtelemente 72 und 82 auf gegenüberliegende Seiten einer Trägerfolie 80 aufweist. Im Ausführungsbeispiel der Fig. 9 sind auf die äußeren Absorberschichten 78 bzw. 88 zusätzliche Prägelackschichten 112 und 114 aufgebracht, die bei Betrachtung des Sicherheitselements 110 von gegenüberliegenden Seiten jeweils einen Hologrammeffekt zu dem Farbkippeffekt zufügen. Es versteht sich, dass die beiden Hologrammeffekte gleich oder verschieden gestaltet werden können oder dass auch nur eine Seite des Sicherheitselements mit einer Prägelackschicht ausgestattet werden kann. Um den Hologrammeffekt deutlicher optisch hervorzuheben, kann auf die geprägte Oberfläche der Schicht 112 und/oder der Schicht 114 zusätzlich eine hochbrechende Schicht, wie z.B. ZnS, aufgebracht werden.

Die beschriebenen Dünnschichtelemente, insbesondere die doppelseitigen Dünnschichtelemente, können zur Herstellung von Druckfarben mit optisch variablen Farbpigmenten genutzt werden. Eine solche Druckfarbe ist in Fig. 10 schematisch dargestellt. Zur Herstellung der Druckfarbe 120 wird auf eine Trägerfolie ein großflächiges Dünnschichtelement mit Farbkippeffekt oder mit doppelseitigem Farbkippeffekt aufgebracht. Das Dünnschichtelement wird von der Trägerfolie mechanisch abgeschabt und die abgeschabten Flocken bei Bedarf auf eine gewünschte Partikelgröße gemahlen. Die entstehenden Interferenzschicht-Partikel werden dann als optisch variable Farbpigmente 122 in ein Bindemittel der Druckfarbe 120 eingebracht. Auf diese Weise lässt sich einfach und kostengünstig eine Vielzahl unterschiedlicher Pigmente mit optisch ansprechendem Farbeindruck herstellen.

## Patentansprüche

1. Verfahren zur Herstellung eines Sicherheitselements für Sicherheitspapiere, Wertdokumente und dergleichen, mit einem Dünnschichtelement mit Farbkippeffekt, das eine Reflexionsschicht, eine Absorberschicht und eine zwischen Reflexionsschicht und Absorberschicht angeordnete Zwischenschicht aufweist, **dadurch gekennzeichnet, dass** die Zwischenschicht mit einer Druckfarbe aufgedruckt wird und die Schichtdicke der aufgedruckten Zwischenschicht nach dem Aufdrucken durch äußere Einflüsse modifiziert wird, wobei
- entweder die Zwischenschicht mit einem lösungsmittelhaltigen reaktiven Lacksystem aufgedruckt wird, das Lösungsmittel durch eine thermische Trocknung verdampft wird und der Lack durch elektromagnetische Strahlung, Elektronenstrahlbehandlung oder Temperatureinwirkung polymerisiert wird, oder die Zwischenschicht mit einer ein schäumbares Material enthaltenden Druckfarbe aufgedruckt wird und das Material durch elektromagnetische Strahlung, Elektronenstrahlbehandlung oder Temperatureinwirkung aufgeschäumt wird, und
- die Dicke der Zwischenschicht lokal modifiziert wird, um entweder eventuelle Ungleichmäßigkeiten des Aufdruckvorgangs auszugleichen, oder ein Muster, Zeichen, oder eine Codierung in das Sicherheitselement einzubringen.

2. Verfahren nach Anspruch 1, **dadurch gekennzeichnet, dass** die Schichtdicke irreversibel modifiziert wird.

3. Verfahren nach einem der Ansprüche 1 oder 2, **dadurch gekennzeichnet, dass** die Dicke der Zwischenschicht vor dem Polymerisationsschritt oder dem Aufschäumschritt gemessen wird, insbesondere, dass die Schichtdicke berührungslos gemessen wird.

4. Verfahren nach Anspruch 3, **dadurch gekennzeichnet, dass** die Dicke der Zwischenschicht an verschiedenen Stellen gemessen wird, um Informationen über eventuelle Ungleichmäßigkeiten des Aufdruckvorgangs zu erhalten.

5. Verfahren nach wenigstens einem der Ansprüche 1 bis 4, **dadurch gekennzeichnet, dass** die Dickenmodifikation der Zwischenschicht vor dem Aufbringen weiterer Schichten auf die Zwischenschicht erfolgt.

6. Verfahren nach wenigstens einem der Ansprüche 1 bis 5, **dadurch gekennzeichnet, dass** die Zwischenschicht mittels Tiefdruck, Flexodruck oder Offsetdruck aufgebracht wird.

7. Verfahren nach wenigstens einem der Ansprüche 1 bis 6, **dadurch gekennzeichnet, dass** das Dünnschichtelement auf einer Trägerfolie mit einer flächigen Beugungsstruktur aufgebracht wird.

8. Verfahren nach wenigstens einem der Ansprüche 1 bis 7, **dadurch gekennzeichnet, dass** das Dünnschichtelement mit einer geprägten Lackschicht mit einer flächigen Beugungsstruktur versehen wird.

9. Verfahren nach wenigstens einem der Ansprüche 1 bis 8, **dadurch gekennzeichnet, dass** das Dünnschichtelement nach der Dickenmodifikation der Zwischenschicht mit einer Schutzschicht zur Verhinderung weiterer Schichtdickenmodifikationen versehen wird.

## Claims

1. A method for manufacturing a security element for security papers, value documents and the like, having a thin-film element having a color-shift effect, that exhibits a reflection layer, an absorber layer and an intermediate layer arranged between the reflection layer and the absorber layer, **characterized in that** the intermediate layer is imprinted with a printing ink, and after the imprinting, the layer thickness of the imprinted intermediate layer is modified by external influences, wherein
- either the intermediate layer is imprinted with a solvent-containing reactive lacquer system, the solvent is evaporated by a thermal drying and the lacquer is polymerized by electromagnetic radiation, electron beam treatment or the action of temperature, or the intermediate layer is imprinted with a printing ink containing foamable material and the material is foamed by electromagnetic radiation, electron beam treatment or the action of temperature, and
- the thickness of the intermediate layer is locally modified to either compensate for any irregularities in the imprinting process, or to introduce a pattern, character or code into the security element.

2. The method according to claim 1, **characterized in that** the layer thickness is irreversibly modified.

3. The method according to one of claims 1 or 2, **characterized in that** the thickness of the intermediate layer is measured before the polymerization step or the foaming step, especially **in that** the layer thickness is measured contactlessly.

4. The method according to claim 3, **characterized in that** the thickness of the intermediate layer is measured at different locations to obtain information about any irregularities in the imprinting process.

5. The method according to at least one of claims 1 to 4, **characterized in that** the thickness modification of the intermediate layer occurs before the application of further layers to the intermediate layer.

6. The method according to at least one of claims 1 to 5, **characterized in that** the intermediate layer is applied by means of intaglio printing, flexographic printing or offset printing.

7. The method according to at least one of claims 1 to 6, **characterized in that** the thin-film element is applied to a carrier foil having an areal diffraction pattern.

8. The method according to at least one of claims 1 to 7, **characterized in that** the thin-film element is provided with an embossed lacquer layer having an areal diffraction pattern.

9. The method according to at least one of claims 1 to 8, **characterized in that**, after the thickness modification of the intermediate layer, the thin-film element is provided with a protective layer to prevent further layer thickness modifications.

## Revendications

1. Procédé de fabrication d'un élément de sécurité pour papiers de sécurité, documents de valeur et analogues, comportant un élément en couche mince avec effet d'inclinaison, qui comprend une couche réfléchissante, une couche absorbante et une couche intermédiaire disposée entre la couche réfléchissante et la couche absorbante, **caractérisé en ce que** la couche intermédiaire est surimprimée à l'aide d'une encre d'imprimerie, et l'épaisseur de couche de la couche intermédiaire surimprimée est modifiée par des influences extérieures après la surimpression, dans lequel
- soit la couche intermédiaire est surimprimée à l'aide d'un système de vernis réactif contenant un solvant, le solvant est évaporé par un séchage thermique, et le vernis est polymérisé par un rayonnement électromagnétique, un traitement par un faisceau d'électrons ou sous l'influence de la température, soit la couche intermédiaire est surimprimée à l'aide d'une encre d'imprimerie contenant un matériau expansible, et le matériau est expansé sous l'effet d'un rayonnement électromagnétique, d'un traitement par un faisceau d'électrons ou sous l'influence de la température, et
- l'épaisseur de la couche intermédiaire subit une modification locale, pour compenser les éventuelles irrégularités de l'opération de surimpression, ou pour introduire dans l'élément de sécurité un modèle, un caractère ou un codage.

2. Procédé selon la revendication 1, **caractérisé en ce que** l'épaisseur de couche subit une modification irréversible.

3. Procédé selon l'une des revendications 1 ou 2, **caractérisé en ce que** l'épaisseur de la couche intermédiaire est mesurée avant l'étape de polymérisation ou l'étape d'expansion, en particulier **en ce que** l'épaisseur de couche est mesurée sans contact.

4. Procédé selon la revendication 3, **caractérisé en ce que** l'épaisseur de la couche intermédiaire est mesurée en différents points, pour obtenir des informations sur d'éventuelles irrégularités de l'opération de surimpression.

5. Procédé selon au moins l'une des revendications 1 à 4, **caractérisé en ce que** la modification d'épaisseur de la couche intermédiaire a lieu avant l'application de couches supplémentaires sur la couche intermédiaire.

6. Procédé selon au moins l'une des revendications 1 à 5, **caractérisé en ce que** la couche intermédiaire est appliquée par héliographie, impression flexographique ou impression offset.

7. Procédé selon au moins l'une des revendications 1 à 6, **caractérisé en ce que** l'élément en couche mince est appliqué sur une feuille support comportant une structure de diffraction bidimensionnelle.

8. Procédé selon au moins l'une des revendications 1 à 7, **caractérisé en ce que** l'élément en couche mince est pourvu d'une couche de vernis gaufrée ayant une structure de diffraction bidimensionnelle.

9. Procédé selon au moins l'une des revendications 1 à 8, **caractérisé en ce que** l'élément en couche mince est, après la modification d'épaisseur de la couche intermédiaire, pourvu d'une couche de protection pour empêcher des modifications supplémentaires de l'épaisseur de la couche.
